# EUROPEAN PATENT SPECIFICATION

(11) **EP 3 207 738 B1**
(45) Date of publication and mention of the grant of the patent: **31.07.2019**
(21) Application number: 15850891.1
(22) Date of filing: 25.09.2015
(51) Int. Cl.: H04W 72/04, H04W 76/15, H04W 88/06, H04W 88/10

(54) **UPLINK TRAFFIC CONTROL IN TIGHTLY INTEGRATED WIFI/LTE**
UPLINK-DATENVERKEHR-STEUERUNG IN DICHT INTEGRIERTEM WI-FI/LTE
COMMANDE DE TRAFIC DE LIAISON MONTANTE DANS UNE TECHNOLOGIE WIFI/LTE ÉTROITEMENT INTÉGRÉE

(30) Priority: 15.10.2014 US 201462064284 P
(43) Date of publication of application: 23.08.2017
(73) Proprietor: Intel IP Corporation, Santa Clara, CA 95054 (US)
(72) Inventor: NIU, Huaning, Milpitas, California 95035 (US); FONG, Mo-Han, Sunnyvale, California 94087 (US); HIMAYAT, Nageen, Fremont, California 94539 (US); JEON, Jeongho, San Jose, California 95118 (US)
(74) Representative: 2SPL Patentanwälte PartG mbB
(86) International application number: PCT/US2015/052189
(87) International publication number: WO 2016/060823

(56) References cited:
- WO-A1-2013/145592
- WO-A1-2014/165832
- US-A1- 2014 043 979
- US-A1- 2014 050 086
- INTEL CORPORATION: 'Summary of CN impact of WLAN/3GPP radio interworking' RP-140222, TSG RAN MEETING #63 03 March 2014, FUKUOKA, JAPAN, XP050780358
- INTEL CORPORATION: 'Motivation for new SI : Integrated LTE-WLAN RATs' RP-140685, TSG RAN MEETING #64 03 June 2014, SOPHIA ANTIPOLIS, FRANCE, XP050781683
- ZTE: 'Assistance information exchanging for RAN-assisted WLAN interworking' R3-142406, 3GPP TSG-RAN WG3 MEETING #85BIS 26 September 2014, SHANGHAI, CHINA, XP050870837
- NOKIA NETWORKS ET AL.: 'TP on optimization of eNB/NB broadcast' R3-142233, 3GPP TSG-RAN WG3 MEETING #85BIS 26 September 2014, SHANGHAI, CHINA, XP050870746

## Description

### TECHNICAL FIELD

This application relates to 3GPP, RAN2, and integrated WiFi and LTE.

### BACKGROUND

The evolved packet core (EPC) is the core network of advanced mobile communication systems. The EPC allows different radio access technologies (RATs) to operate in an integrated manner. These radio access technologies include first generation wireless local area networks (WLANs), second generation (2G) systems, such as Global System for Mobile communication (GSM), third generation systems (3G) such as the Universal Mobile Telecommunication System (UMTS), and fourth generation systems (4G) such as Long Term Evolution (LTE).

A mobile device such as a cellphone may support multiple RATs. Only one RAT is operable at a time in the cellphone. A mobile user that is said to be "camped" on one RAT is utilizing only the technology of that RAT. The mobile user may be switched from one RAT to another, thus switching where the mobile user is camped. Thus, the mobile user may be camped on LTE, get switched from the 4G RAT to the 3G RAT, and is thereafter camped on UMTS. These switching operations are generally transparent to the user of the mobile device.

A mobile user having Wireless Fidelity, or WiFi, capability (where the mobile station is known in IEEE parlance as a station or STA) is able to communicate wirelessly over the air (known as a wireless local area network or WLAN). Both mobile users and other entities making up the WLAN operate according to the Institute of Electrical and Electronics Engineers
(IEEE) 802.11 standard.

A mobile user having LTE capability is also able to transmit and receive high-speed data wirelessly over the air (known as an Evolved Universal Terrestrial Radio Access Network, or EUTRAN), where the air is also called "media" or "wireless media". Under LTE, the mobile user is known as an user equipment (UE). Both the UE and other entities making up the EUTRAN operate according to the Third Generation Partnership Project (3GPP) wireless communication standard. LTE-capable mobile devices are known as 4G in industry parlance (the 3GPP has also developed 3G technology). LTE is also known as a cellular network, whereas the WiFi WLAN is not called a cellular network.

Most mobile devices being manufactured today include both WiFi and LTE capability. WiFi and LTE modems are separately part of the architecture of mobile devices such as cell phones. The WiFi and LTE technologies embedded within the mobile device do not interact however, as they are developed according to distinct standards, IEEE and 3GPP, respectively, as described above. To the human user, switches between WiFi and LTE operation within the mobile device are generally seamless and transparent.

On the 3GPP side, efforts are being made to integrate WLAN with 3GPP into an integrated radio access network (RAN) architecture. One of the 3GPP working groups, RAN2, pertains to mobility management. When a mobile user switches from 3G to 4G or from 4G to WiFi, for example, mobility management is involved. Mobility management is also dedicated to the interworking of WiFi and LTE within the integrated radio access network.

To fully explore the tight coupling of AP and LTE access, such as improving capacity and user throughput, accurate estimation of WiFi throughput is required. Since WiFi implements a random access protocol, the UL traffic is not as predictable as scheduled LTE UL traffic, creating difficulty for WiFi rate estimation.

Thus, there is continuing need to control the UL traffic for improved optimization of the overall system.

WO 2013/145592 A1 discloses a wireless communications system according to the 3rd Generation Partnership Project (3GPP) standards or equivalents or derivatives thereof.

US 2014/0043979 A1 discloses systems and methods for opportunistic cross radio access technology (RAT) bandwidth allocation. US 2014/0050086 A1 discloses systems and methods for controlling data traffic offload to a WLAN (e.g. a WiFi network) from a WWAN (e.g. a 4G LTE network).

### BRIEF DESCRIPTION OF THE DRAWINGS

The foregoing aspects and many of the intended advantages of this document will become more readily appreciated as the same becomes better understood by reference to the following detailed description, when taken in conjunction with the accompanying drawings, wherein like reference numerals refer to like parts throughout the various views, unless otherwise specified.
Figure 1 is a simplified block diagram of an integrated multi-RAT architecture, according to some embodiments;
Figure 2 is a simplified block diagram of the uplink traffic control method using the integrated multi-RAT architecture of Figure 1, according to some embodiments;
Figures 3A and 3B illustrate operations performed by the uplink traffic control method of Figure 2, according to some embodiments;
Figure 4 is a simplified diagram illustrating the a default radio bearer and a WiFi radio bearer generated during the uplink traffic control method of Figure 2, according to some embodiments;
Figure 5 is a simplified block diagram showing EDCA parameters for differentiating user priorities by the uplink traffic control method of Figure 2, according to some embodiments;
Figure 6 illustrates operations performed by the uplink traffic control method employing a first scheme, according to some embodiments;
Figure 7 illustrates operations performed by the uplink traffic control method employing a second scheme, according to some embodiments;
Figure 8 illustrates operations performed by the uplink traffic control method employing a third scheme, according to some embodiments;
Figures 9A and 9B are simplified system diagrams of a wireless neighborhood featuring an enhanced node B and an user equipment, both of which are implementing the uplink traffic control method of Figure 2, according to some embodiments; and
Figure 10 is a simplified block diagram of a UE capable of implementing the uplink traffic control method of Figure 2, according to some embodiments.

### DETAILED DESCRIPTION

The invention is defined by the independent claims. The dependent claims define advantageous embodiments.

In accordance with the embodiments described herein, an uplink (UL) traffic control method is disclosed. The UL traffic control method exploits an available operator-controlled WiFi wireless local area network. The UL traffic control method, operating from within the LTE modem, employs one of three possible techniques for controlling the UE UL traffic within an integrated multiple radio access control (RAT) architecture. The operations are seamless and transparent to a user of the multi-RAT UE.

In the following detailed description, reference is made to the accompanying drawings, which show by way of illustration specific embodiments in which the subject matter described herein may be practiced. However, it is to be understood that other embodiments will become apparent to those of ordinary skill in the art upon reading this disclosure. The following detailed description is, therefore, not to be construed in a limiting sense, as the scope of the subject matter is defined by the claims.

An integrated WLAN/3GPP architecture is based on the availability of physically or logically co-located LTE and WLAN small cells. For LTE, the cells are the coverage area of a given wireless base station. In the case of WiFi, the base station is known as an access point (AP). In 3G, the base station is known as a cellular access point or a node B (NB), and in 4G, the base station is an enhanced node B (eNB). Physically or logically co-located LTE and WLAN small cells enable a tightly coordinated user and data plane interface between the WLAN AP and the 3GPP eNB.

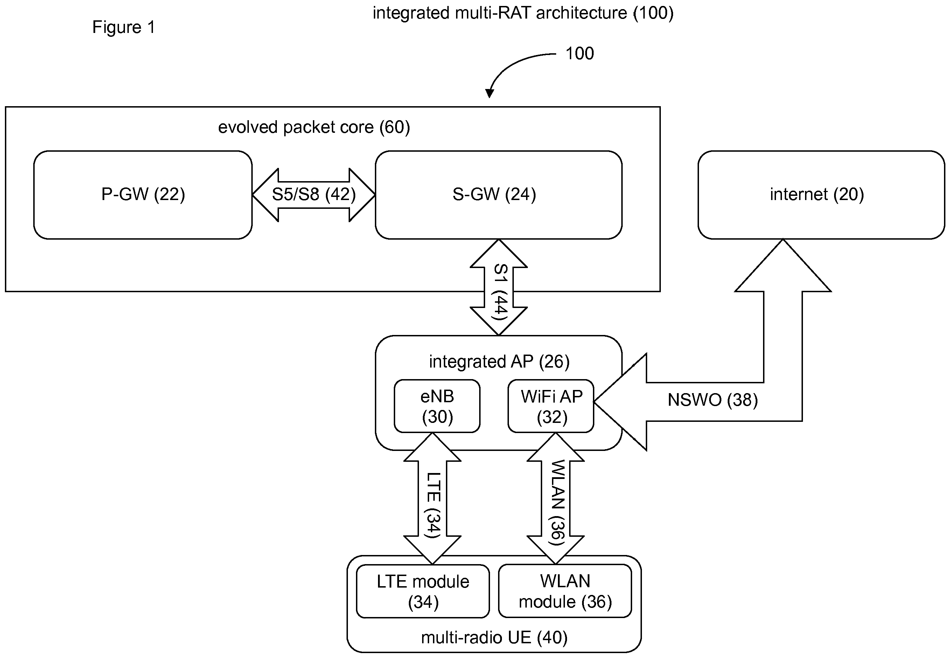

Figure 1 illustrates an integrated multi-RAT architecture 100, featuring both WLAN and 3GPP entities, according to some embodiments. The architecture of Figure 1 is called "multi-RAT" because it supports multiple radio access technologies, at least two of which are WiFi and LTE (2G and 3G capability may also be present). The multi-RAT architecture 100 is capable of supporting a UL traffic control method 200, as described below.

The integrated multi-RAT architecture 100 features a packet data network gateway, P-GW 22, a serving gateway, S-GW 24, and an Internet 20. An integrated access point 26 is a base station that includes both an eNB 30 (for 4G) and a WiFi AP 32 (for WiFi). This tightly integrated WiFi/LTE access point 26 supports the UL traffic control method 200.

An user equipment (UE) 40 is a multi-radio UE, including the capability for both WiFi (via a WLAN module 36) and LTE (via an LTE module 34) wireless communication. The WLAN module 36 is also known herein as the WiFi link. Within the integrated AP 26, the eNB 30 communicates with the UE 40 over the LTE interface 34 while the WiFi AP 32 communicates with the UE over the WLAN interface 36.

The integrated AP 26 accesses the serving gateway, S-GW 24, via an interface 44, known as S1, while the packet data network gateway, P-GW 22, and the serving gateway, S-GW 24, communicate by way of S5 and S8 interfaces 42. The P-GW 22 and the S-GW 24, along with the S5/S8 interface 42, are part of the evolved packet core (EPC) 60. Specific information about these interfaces is beyond the scope of this disclosure.

Between the WiFi AP 32 and the Internet 20 is a dedicated channel, the non-seamless WLAN offload (NSWO) 38. The NSWO 30 is 3GPP technology parlance for WiFi offloading. Once a WiFi connection is available, the UE 40 is offloaded from the LTE network to the WLAN, in some embodiments. For example, a mobile device is operating in a 4G cell, communicating with an eNB operating in that cell. Subsequently, when the mobile device is able to access a WiFi AP (such as a WLAN made available to customers at a coffee shop), the mobile device is offloaded from the 4G cell to the WiFi WLAN and 4G operation ceases.

As used herein, the WiFi AP 32 refers to an operator-deployed AP, such as is found in public locations, e.g., coffee shops, libraries, and airports. Operator-deployed APs do not include home WiFi networks. Home WiFi networks are not the subject of this disclosure and are not to be accessed by the LTE eNB, as home networks are not publicly accessible.

The integrated multi-RAT architecture 100 of Figure 1 enables WLAN as a "secondary carrier" or "secondary cell" (Scell) within the operator's cellular network. The LTE carrier serves as the "primary carrier" or "primary cell" (Pcell), providing both control and data plane anchors for WLAN. The use of WLAN is transparent to the 3GPP EPC (Evolved Packet Core) network and the S1 and 3GPP interfaces. In the architecture 100, the transmission on the WiFi link 36 is managed by a Radio Resource Controller (RRC) on the cellular wireless wide area network (WWAN) side (in conjunction with a multi-RAT coordination function), which provides the management and control functions. In some embodiments, the WiFi link 36 is used to opportunistically transmit data for a cellular (e.g., LTE) session.

To fully explore the tight coupling of AP and LTE access, such as improving capacity and user throughput, accurate estimation of WiFi throughput is required, in some embodiments. Since WiFi implements a random access protocol, the UL traffic is not as predictable as scheduled LTE UL traffic, creating difficulty for WiFi rate estimation. Therefore, it is desirable to control the UL traffic to a certain degree so as to better optimize the overall system. Since the UL traffic control method 200 is an LTE implementation for exploiting an operator-deployed WLAN, the mobile device herein is a multi-radio UE 40, as illustrated in Figure 1.

Traditionally, the eNB has had very limited control of WiFi uplink traffic. The UL traffic control method 200, implemented in an integrated multi-RAT architecture 100, such as in Figure 1, is designed to change that. In some embodiments, there are three methods by which the integrated multi-RAT architecture 100 of Figure 1 controls WiFi UL transmission for the integrated cell, e.g. the integrated AP 26 featuring both the LTE eNB 30 and the WiFi AP 32, in which the mobility and traffic steering is controlled by the LTE network with an anchor at the radio access network (RAN).

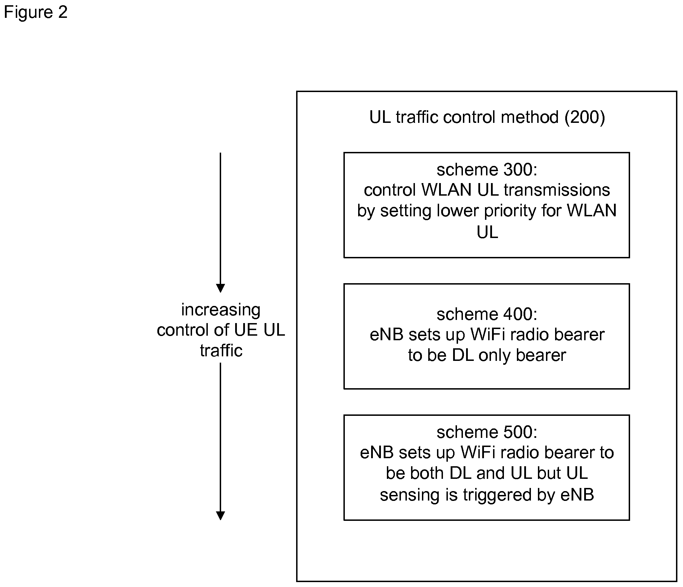

As illustrated schematically in Figure 2, in some embodiments, under the UL traffic control method 200, there are three possible schemes listed for control of the UE UL traffic:
- Scheme (300): Control WLAN UL transmissions by setting a lower priority for WLAN UL
- Scheme (400): eNB set up the WiFi radio bearer to be DL only bearer
- Scheme (500): eNB set up the WiFi radio bearer to be both DL and UL bearer, but the UL sensing is triggered by the eNB.
As illustrated by the arrow to the left of the UL traffic control method 200, each succeeding scheme exhibits increasing control of the UE UL traffic, with the scheme 300 exerting the least control of the UE UL traffic and the scheme 500 having the most control. Each of these schemes will be described in more detail below.

### Motivation

In contrast to the cellular world, WiFi uses an unlicensed band, which is essentially free to exploit. Concurrently, cellular operators are trying to offload some of their traffic. Currently, the eNB has very limited control of WiFi uplink traffic.

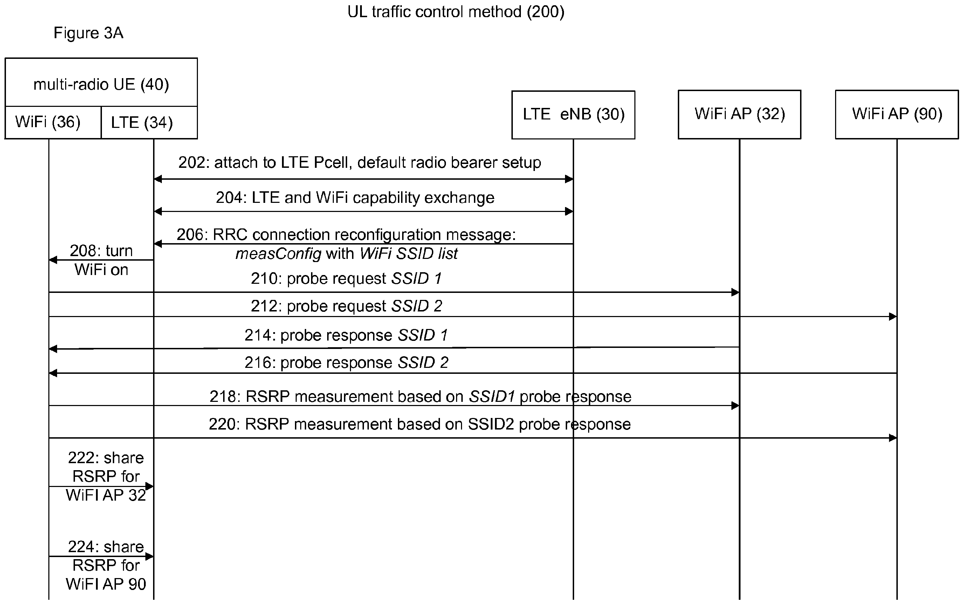

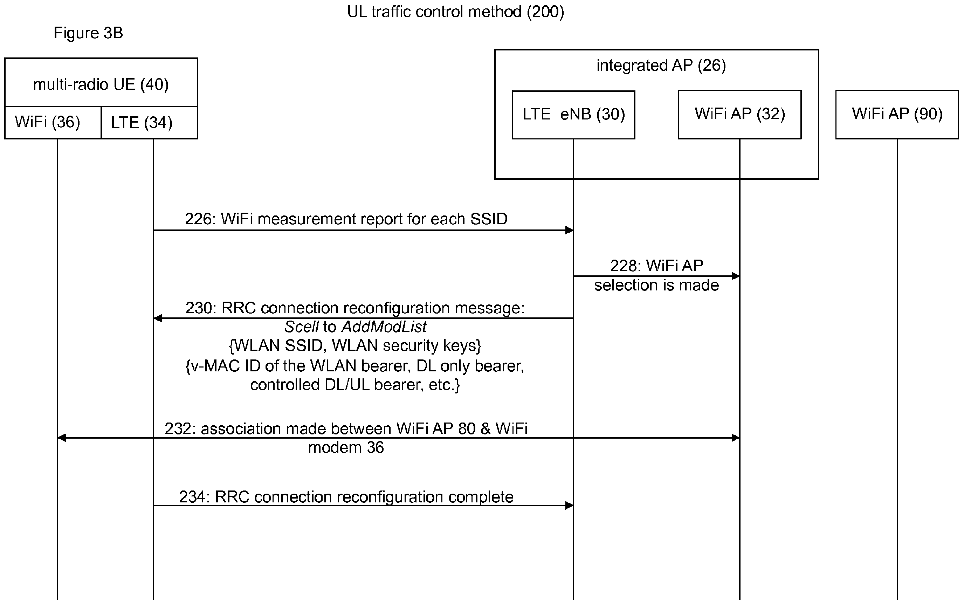

In the integrated WLAN/3GPP architecture such as the integrated multi-RAT architecture 100 of Figure 1, a UE performs cell selection/reselection, selects the eNB of the integrated cell according to existing EUTRAN association and cell selection procedures based on 3GPP link quality. For the operator controlled WiFi AP 32, beacon transmission is not required if the WLAN operator chooses to hide this AP from other WiFi stations that are not managed by the operator. For example, a WiFi AP controlled by the AT&T network would only be visible to an AT&T customer (mobile user). In this case, dedicated signaling over the Pcell shall be used to indicate the availability of WLAN APs, and what kind of WiFi bearer should be set up. Figures 3A and 3B illustrate a general process to set up WiFi association for operator-controlled WiFi whose Service Set Identifier (SSID) is hidden from a non-operator controlled UE.

In Figures 3A and 3B, the UL traffic control method 200 performs integrated WiFi association and bearer setup, according to some embodiments. The UL traffic control method 200 involves the multi-radio UE 40 having both LTE 34 and WIFI/WLAN 36 capability shown in Figure 1, the LTE eNB 30, and two WiFi APs 32 and 90 (one of which will become the AP 32, as in Figure 1). The operations of Figures 3A and 3B are treated as process steps, with each step being associated with a unique number (202 - 234). One or more of the operations may take place in an order other than is shown.

The UL traffic control method 200 begins with the multi-radio UE 40 attaching to the Pcell in the area, which is often the cell in closest proximity to the UE. In this example, the LTE eNB 30 serves as the Pcell. A default radio bearer setup takes place (step 202) between the eNB 30 and the UE 40. The default radio bearer is set up according to the 3GPP specification.

A term used in cellular (LTE) but not WiFi (WLAN) systems, a bearer identifies a transmission flow from the eNB 30 to the UE 40. The bearer is associated with a certain quality of service (QoS). As in WiFi transmissions, the UE 40 under LTE may transmit different types of traffic, such as voice, video, and data download. A different bearer may be assigned with each of these different types of traffic. When the eNB 30 is resource-limited, the higher-priority bearer, such as voice, will be scheduled before the other bearers are scheduled. This conforms to an expected user experience, as users notice a delay in voice transmission but are less likely to notice a delay in web page loading.

An LTE and WiFi capability exchange takes place between the eNB 30 and the UE 40 (step 204). In this step, the eNB 30 is determining whether the UE 40 has integrated WiFi association and bearer setup capability. Most mobile phones now have dedicated modems for both WiFi and LTE, but the modems do not communicate with one another. The multi-radio UE 40, by contrast, integrates operations between its LTE modem 34 and its WiFi modem 36.

Once satisfied that the UE 40 is capable of participating in the integrated WiFi association and bearer setup, the eNB 30 issues a radio resource control (RRC) connection reconfiguration message, *measConfig,* with a WiFi service set identifier (SSID) list, *WiFi SSID list,* as its parameter (step 206) to the UE.

RRC configuration messages are run-time messages that are used for many different radio resource control functions. Here, the eNB 30 is instructing the UE 40 to take a measurement, *measConfig,* of the available WiFi APs given in the parameter, *WiFi SSID list.* The eNB 30 determines which WiFi APs are within the network of the eNB and, based on the determination, generates the parameter, *WiFi SSID list.* In this example, the *WiFi SSID list* includes two entries, *SSID1* (for WiFi AP 32) and *SSID2* (for WiFi AP 90).

In some embodiments, the measurement to be taken by the UE 40 is a reference signal received power (RSRP) of the media (the air) between the UE and the respective WiFi AP. Before the UE 40 can take the RSRP measurements, however, the LTE modem 34 turns on the WiFi modem 36 (step 208). Once active, the WiFi modem 36 sends a probe request using *SSID1* to the WiFi AP 32 (step 210) and a probe request using *SSID2* to the WiFi AP 90 (step 212).

Since the LTE eNB 30 determined that the two WiFi APs 32 and 90 are present, the UE 40 should expect a response from both. As illustrated in Figure 3A, the WiFi AP 32 sends a probe response using *SSID1* to the WiFi modem 36 on the UE 40 (step 214) and the WiFi AP 90 sends a probe response using *SSID2* to the UE (step 216). These steps may take place in an order different than is depicted in Figures 3A and 3B.

Once the two probe responses are received, RSRP measurements corresponding to each WiFi AP are taken by the WiFi modem 36 (steps 218 and 220) and are also made available to the LTE modem 34 (steps 222 and 224). Continuing the operations of the UL traffic control method 200 in Figure 3B, the LTE modem 34 then generates a WiFi measurement report of the UE 40, including the RSRPs for each SSID, and sends the report to the eNB 30 (step 226).

Suppose the RSRP measurement for WiFi AP 32 is 20 dB and the RSRP measurement for WiFi AP 90 is 10 dB, as one example. This would mean that the WiFi AP 32 is closer to the UE 40, since its RSRP is 10 dB higher than for the WiFi AP 90, and thus the WiFi AP 32 would be preferred for connection by the UE. From the WiFi measurement report, the eNB 30 makes a selection of one of the two WiFi APs (step 228). The UE 40 now has available both the LTE eNB 30 and, in this case, the WiFi AP 32. The LTE eNB 30 and the WiFi AP 32 may now be thought of as an integrated AP 26, as in Figure 1.

Next, the eNB 30 sends another RRC connection reconfiguration message, *Scell to AddModList* (step 230). In the LTE world, the eNB 30 is the primary cell (Pcell). The RRC connection reconfiguration message simply adds the selected WiFi AP 32 as a secondary cell (also known as Scell) and includes parameters specific to that WiFi AP. In this case, the WLAN SSID, the WLAN security keys, the v-MAC ID of the WLAN bearer, the DL-only bearer, the controlled DL/UL bearer, etc., are part of the RRC connection reconfiguration message. Once the RRC reconfiguration message succeeds, an association between the selected WiFi AP and the WiFi modem 36 in the UE 40 is made (step 232). The RRC connection reconfiguration is thus complete and the UE 40 so notifies the eNB 30 (step 234).

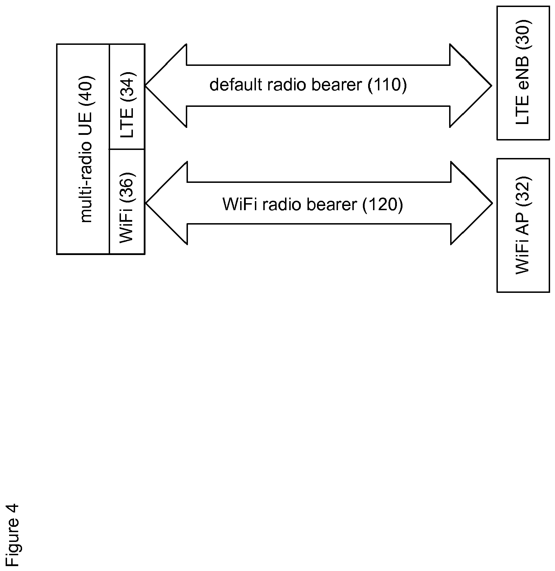

Recall that bearers are not part of the WLAN/WiFi (IEEE) terminology. The RRC reconfiguration message, *Scell to AddModList,* establishes a WiFi bearer on behalf of the eNB 30. Figure 4 depicts a default radio bearer 110 disposed between the LTE modem 34 and the eNB 30. For ease of illustration, a single radio bearer is depicted to accommodate a single traffic type. System designers of ordinary skill in the art recognize, however, that multiple bearers may be disposed between the LTE modem 34 and the eNB 30, one for each type of traffic. A WiFi radio bearer 120 is disposed between the WiFi AP 80 and the WiFi modem 36. The WiFi radio bearer 120 is created by the UL traffic control method 200, as illustrated in Figures 3A and 3B.

Once the WiFi radio bearer 120 is available to the cellular (LTE) network, WiFi offloading operations can be performed by the integrated AP 26 and the multi-radio UE 40. The UE can now use both the default radio bearer 110 (or multiple radio bearers, one for each type of transmission) and the WiFi radio bearer 120 to perform transmissions. A WiFi connection, as defined by IEEE, includes both UL and DL transmissions. The UL transmission follows similar CSMA procedures as the DL transmission. Short for Carrier Sense Multiple Access, CSMA is a set of rules determining how network devices respond when simultaneous access to a data channel is attempted by two or more mobile devices. Under CSMA, a large number of UEs will result in higher contention overhead than with a small number of UEs. To improve the spectrum efficiency of the unlicensed (WiFi) band, an operator may control the contention in the UL. In some embodiments, as described in more detail below, the WiFi radio bearer 120 has the capability to control the UL connection.

In some embodiments, during establishment of the WiFi bearer 120, the RRC signaling (step 230 in Figure 3B) indicates one of three bearer types: normal WiFi DL/UL bearer (scheme 300), DL-only WiFi bearer (scheme 400), or controlled DL/UL bearer (scheme 500). Each of these schemes is described in more detail below.

### Scheme 300: Control WLAN UL transmissions by setting a lower priority for WLAN UL

Recall from Figure 2 that the scheme 300 involves controlling WLAN UL transmissions by setting a lower priority for WLAN uplink transmissions. In some embodiments, the scheme 300 is achieved through modification of Enhanced Distributed Channel Access (EDCA) parameters used for UL transmissions. EDCA parameters are part of the IEEE 802.11e specification (WiFi), not the 3GPP specification (3G and 4G).

Under the WiFi specification, EDCA prioritizes UL transmissions into four categories: voice, video, best effort, and background, with voice being the highest priority category. This enables higher priority traffic to establish contact with the WiFi access point (AP) sooner than lower priority traffic.

In contrast to LTE wireless media access, WiFi access is contention-based. One or more mobile stations or mobile devices (e.g., mobile phones) wanting to access the WiFi AP do a sensing of the media before trying to access the AP. Contending mobile stations are assigned priority according to the category of use.

WiFi also implements a random access protocol, such that the UL traffic is not as predictable as scheduled LTE UL traffic. The random access protocol is evident in the WiFi back off feature, used prior to each transmission. Each transmission is assigned a randomized back off timer, with higher priority transmissions having back off timers in a lower range of numbers than lower priority transmissions.

Suppose two mobile stations simultaneously compete for access to a WiFi AP. Mobile station A is attempting a voice call (EDCA highest priority) while mobile station B is attempting to view a web page (EDCA lowest priority). Both attempt to access the same WiFi AP simultaneously. A first back off timer of 6 time periods (tp) is set for mobile station A while a second back off timer of 10 tp will be set for mobile station B. After 6 tp, mobile station A's back off timer will expire, allowing mobile station A to access to the WiFi AP. At the same time, mobile station B senses that the media is again busy and freezes its back off timer at 4 tp, since the mobile station A back off timer counted down from 6 tp to 0 tp. Once mobile station A is done with the transmission, mobile station B senses that the media is idle and starts its back off timer again, starting from 4 tp. If mobile station B's back off timer reaches 0 before any other mobile station back off timer, mobile station B will next have access to the WiFi AP.

A beacon frame is a management frame used in the WiFi WLANs (under IEEE 802.11). The beacon frame contains network information and is transmitted periodically, by the AP, to announce the presence of a wireless LAN.

Under the UL traffic control method 200, scheme 300, WLAN UL transmissions are controlled by setting a lower priority for the WLAN UL through modification of the EDCA parameters for UL transmissions. In some embodiments, the eNB 30 uses RRC signaling to indicate the EDCA parameters defined in the WiFi specification. The eNB 30 thus uses RRC signaling to lower the WiFi EDCA parameters.

In some embodiments, for a normal WiFi DL/UL bearer, the UL traffic is controlled coarsely using the EDCA parameter setting normally transmitted in the WiFi beacon. In some embodiments, for the WiFi radio bearer 120 (Figure 4), the eNB 30 controls the EDCA parameters so that the network has a more accurate prediction of the WiFi throughput.

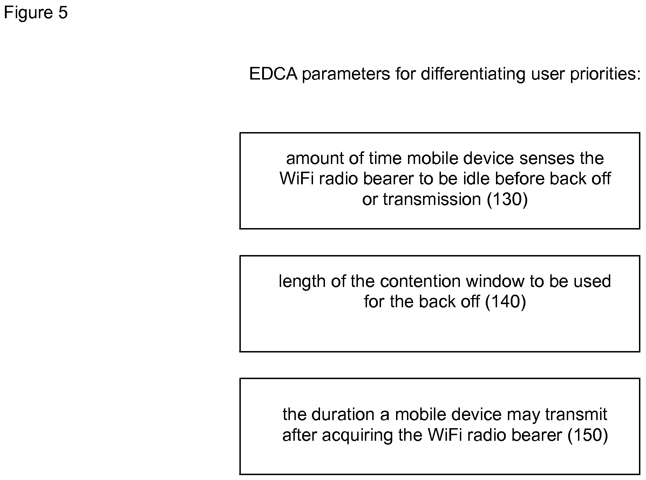

In some embodiments, the WiFi EDCA parameters for differentiating user priorities (UPs) define one or more of the following: 1) the amount of time a WiFi mobile device (station or STA) senses the channel (the WiFi radio bearer 120) to be idle before back off or transmission; 2) the length of the contention window to be used for the back off; or 3) the duration the STA may transmit after it acquires the channel. These parameters 130, 140, and 150 are depicted in Figure 5, according to some embodiments. In this case, the STA is the multi-RAT UE 40.

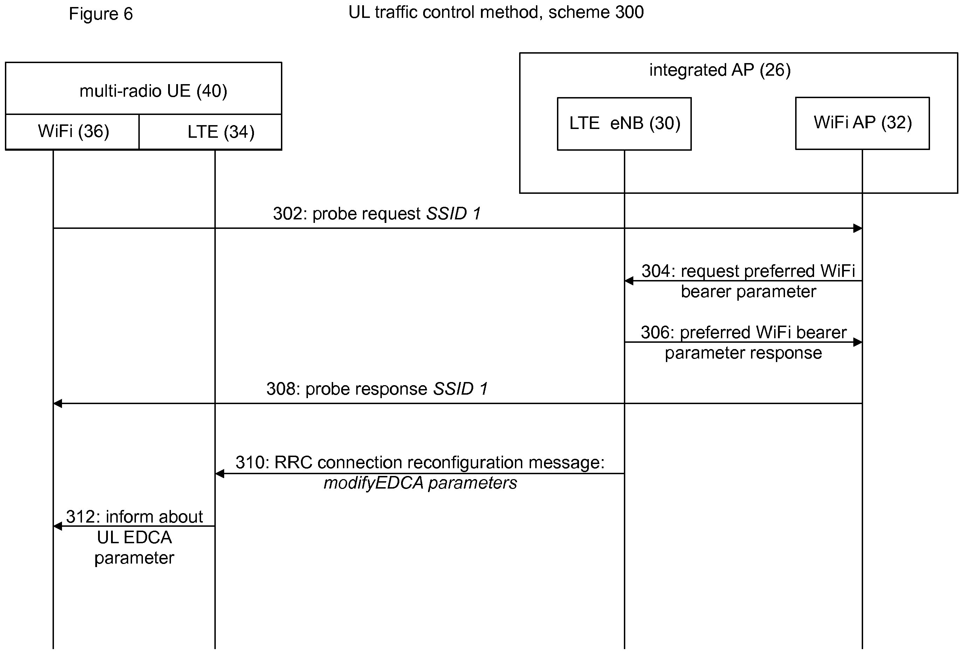

Operations performed by the scheme 300 of the UL traffic control method 200 of Figure 2 are depicted in Figure 6, according to some embodiments. The operations may take place in an order other than is depicted. Recall from Figure 3A that the service set identifier, *SSID1,* is associated with the selected WiFi AP 32 to be exploited. Thus, the multi-radio UE 40 sends a Probe Request using parameter, *SSID1,* to the WiFi AP 32 of the integrated AP 26 (step 302).

Upon receiving the Probe Request, the WiFi AP 32 requests the preferred WiFi bearer parameter from the LTE eNB 30 (step 304). The LTE eNB 30 responds with the preferred WiFi bearer parameter (step 306), which indicates the WiFi radio bearer 120 (Figure 4). A Probe Response frame, with parameter *SSID1,* is sent by the WiFi AP 32 to the WiFi modem 36 of the multi-radio UE 40 (step 308). In some embodiments, the EDCA parameters are set following the Probe Response frame.

In some embodiments, RRC signaling is used to signal the change of the parameters, based on the traffic condition. The eNB 30 uses RRC signaling to indicate the EDCA parameters defined in the WiFi specification, shown in Figure 6 as *modifyEDCAparameters* (step 310). The LTE modem 34 then informs the WiFi modem 36 about the UL EDCA parameter (step 312). The EDCA parameters 120, 130, and 140, are illustrated in Figure 5.

In some embodiments, from the perspective of the WiFi AP 32, a transmission using the WiFi radio bearer 120 acts the same as normal WiFi mobile device transmission.

### Scheme 400: eNB sets up the WiFi radio bearer to be a DL-only bearer

In some embodiments, the scheme 400 employed by the UL traffic control method 200 involves setting up the WiFi radio bearer 120 by the eNB 30 to be a DL-only bearer. In some embodiments, this is achieved using RRC signaling. When the WiFi radio bearer 120 is a DL only WiFi bearer, only the DL data traffic, ACK transmissions, and other management frame transmission are allowed on the WiFi link. Uplink data traffic, including TCP ACK etc., will be transmitted on the LTE UL over the licensed band.

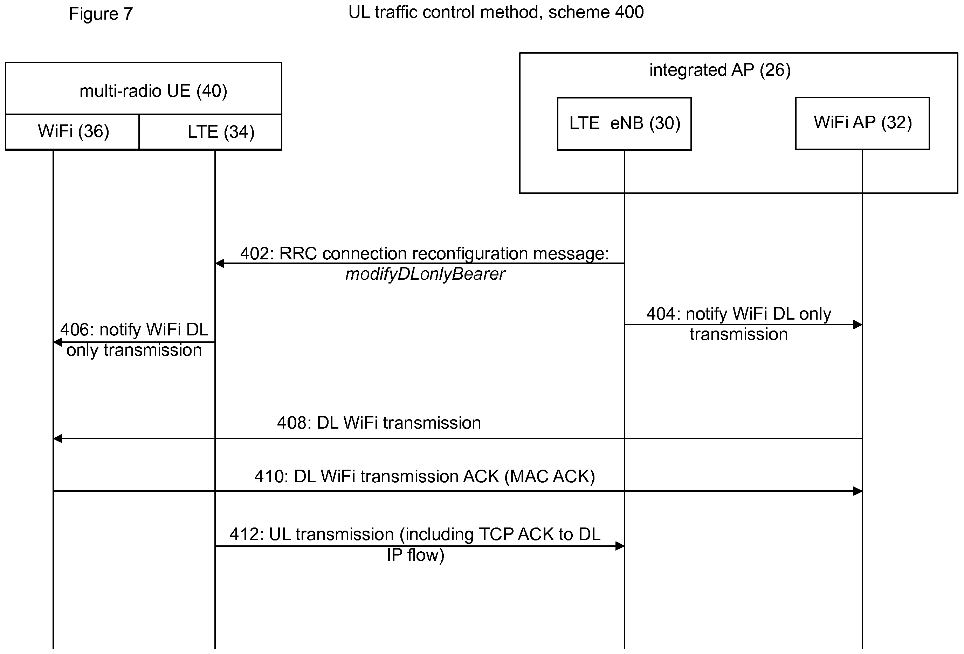

Operations performed by the scheme 400 of the UL traffic control method 200 of Figure 2 are depicted in Figure 7, according to some embodiments. The operations may take place in an order other than is depicted. The LTE eNB 30 sends an RRC connection reconfiguration message with parameter, *ModifyDLonlyBearer,* to the LTE modem 34, to make the WiFi radio bearer 120 be usable only in the downlink (step 402). The LTE eNB 30 so notifies the WiFi AP 32 (step 404) and the LTE modem 34 also notifies the WiFi modem 36 (step 406).

Thereafter, an exclusively downlink transmission from the WiFi AP 32 to the WiFi modem 36 takes place using the WiFi radio bearer 120 (step 408). Once the transmission is complete, the WiFi modem 36 sends the WiFi AP 32 a DL WiFi transmission acknowledgement, or MAC ACK (step 410). A UL transmission from the LTE modem 34 to the LTE eNB 30 includes a TCP ACK to DL IP flow (step 412).

### Scheme 500: eNB sets up the WiFi radio bearer to be both DL and UL bearer, but the UL sensing is triggered by the eNB

In some embodiments, the scheme 500 is employed by the UL traffic control method 200 is to configure the WiFi radio bearer 120 to be a controlled DL/UL WiFi bearer, such that both DL and UL traffic is allowed on the WiFi link. However, the UL traffic is controlled by eNB 30. There are several mechanisms of UL traffic control.

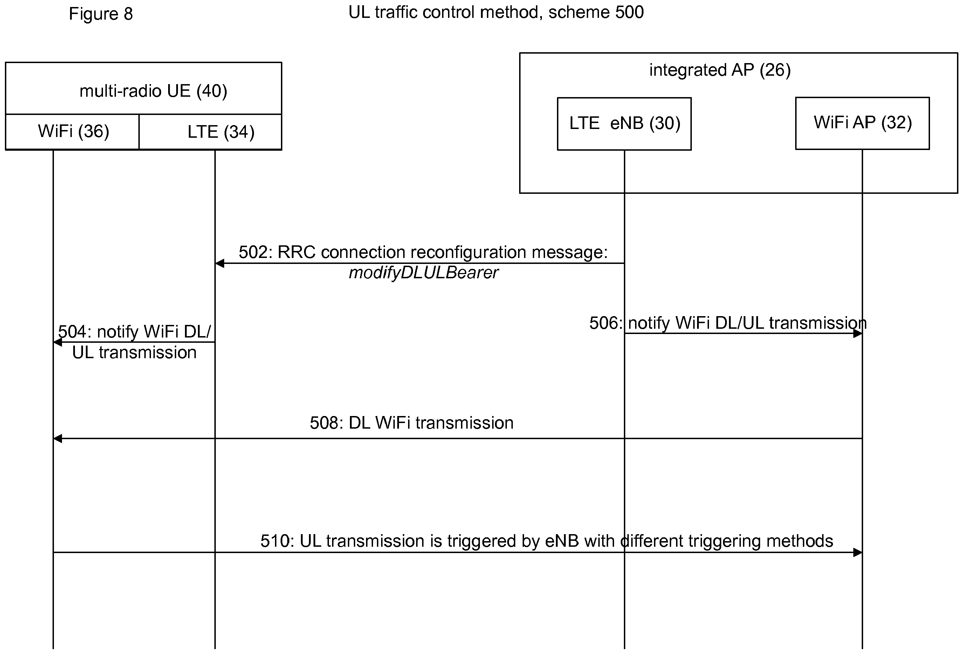

Operations performed by the scheme 500 of the UL traffic control method 200 of Figure 2 are depicted in Figure 8, according to some embodiments. The operations may take place in an order other than is depicted. As in the schemes 300 and 400, the scheme 500 uses an RRC connection reconfiguration message from the LTE eNB 30 to the LTE modem 34. This time, the parameter used is *modifyDLULBearer* to configure the WiFi radio bearer 120 to be a controlled DL/UL WiFi bearer (step 502). Within the multi-radio UE 40, the LTE modem 34 notifies the WiFi modem 36 of the DL/UL transmission type (step 504) and, within the integrated AP 26, the LTE eNB 30 notifies the WiFi AP 32 (step 506).

Thereafter, a downlink transmission from the WiFi AP 32 to the WiFi modem 36 takes place using the WiFi radio bearer 120 (step 508). An uplink transmission from the WiFi modem 36 is controlled by the LTE eNB 30 (step 510). The mechanisms of UL traffic control under the scheme 500, given as 500A, 500B, and 500C, are described in more detail below.

As described in all three schemes, once the WiFi radio bearer 120 is set up, RRC signaling can be used to indicate whether this bearer is a normal WiFi DL/UL bearer (scheme 300), a DL only WiFi bearer (scheme 400), or a controlled DL/UL bearer (scheme 500). Scheme 500 additionally has three possible implementations, as described further below.

In the WiFi specification, two periods are defined, a contention period (CP) and a contention-free period (CFP). APs send beacon frames at regular intervals, and, between the beacon frames, there are two periods, the CP and the CFP. Although the CP is used, the CFP period is not used by many APs or WiFi adapters.

### Scheme 500A: Use of CFP time period

In some embodiments, the integrated AP 26 (consisting of the eNB 30 and the AP 32) reuses the CP or the CFP defined in the WiFi beacon. As the UE 40 is only allowed to perform random access in the CP period, the CP essentially becomes the UL time period. Thus, the AP 32 can use the CFP for DL transmissions.

In some embodiments, scheme 500A has very low overhead, but the UL traffic control granularity is higher than for schemes 500B or 500C. Note that guard periods between the CP and CFP periods are used, in some embodiments, to address the situation wherein transmissions initiated in the CP may not finish before the start of the CFP.

### Scheme 500B: Dynamic control of UL traffic

In some embodiments, dynamic control of the UL traffic is employed. The UE 40 sends a UL scheduling request and buffer status report on the LTE band as a normal LTE operation. If the LTE UL is congested, and the WiFi unlicensed band DL traffic is light, the eNB 30 can decide to use the unlicensed band for UL transmission. In some embodiments, the eNB 30 indicates to the UE 40 that the unlicensed band is to be used for transmission, after which the UE routes the UL traffic to the WiFi link. The UE WiFi modem 36 will start sensing the medium for normal WiFi UL transmission.

### Scheme 500C: eNB specifies pre-back off probability before initiating WLAN access in the UL

In some embodiments, the eNB 30 specifies the pre-back off probability (similar to access class barring probabilities) to use before initiating the WLAN access in the UL. This method may also be used by the eNB 30 to indicate to the LTE modem 34 the probability (or the proportion of the data) to be routed to the WLAN for UL transmission.

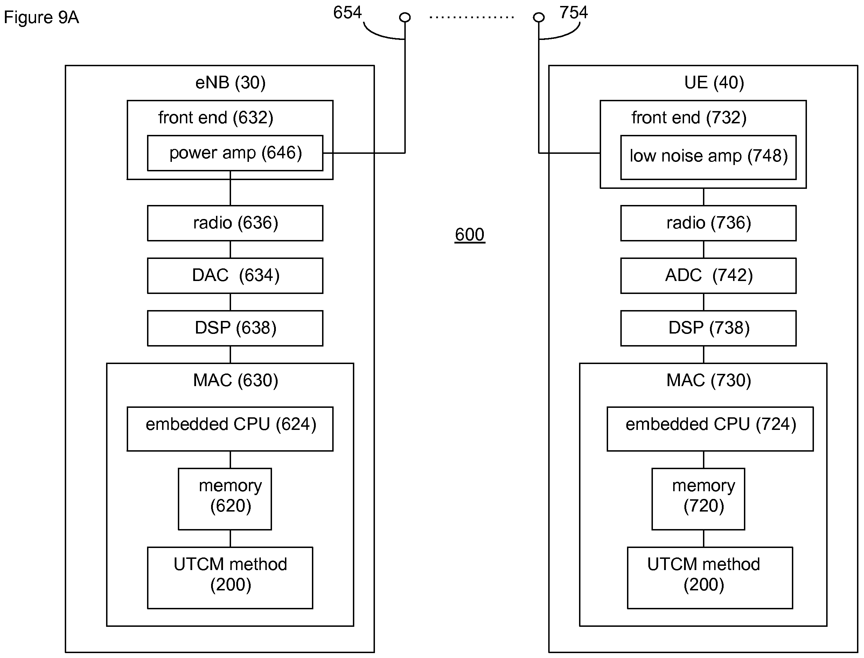

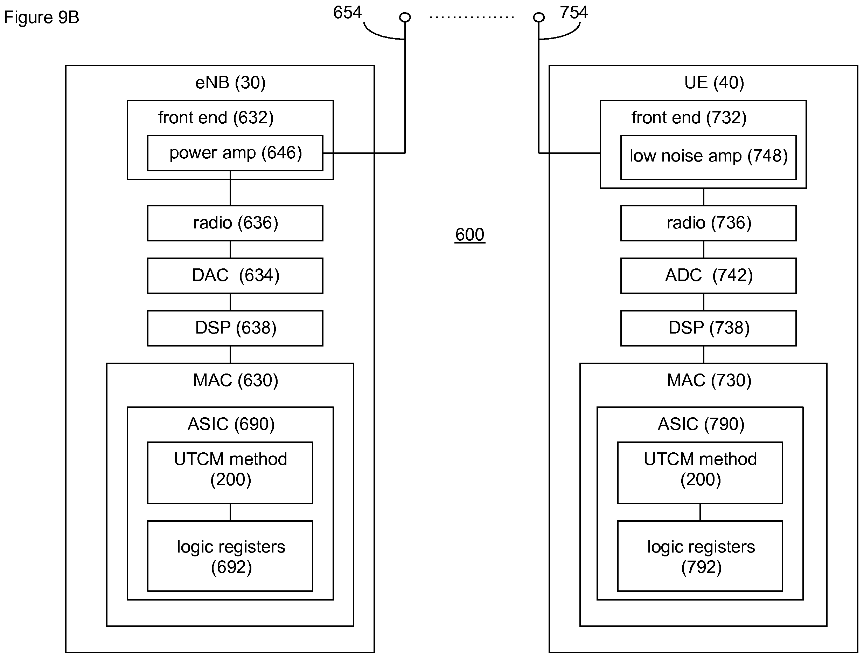

Figures 9A and 9B are simplified block diagrams of a wireless neighborhood 800 including the eNB 30 and the UE 40, both of which are transceivers. The eNB 30 and the UE 40 employ the above-described uplink traffic control method 200, according to some embodiments. In this example, the eNB 30 operates as a transmitter and the UE 40 operates as a receiver. Figure 9A shows a software-based version of the eNB 30 and the UE 40 while Figure 9B shows an ASIC-based version.

Looking first at Figure 9A, the eNB 30 includes an antenna 654, a front-end 632, a radio 636, a baseband digital signal processor (DSP) 638, and a medium access controller (MAC) 630. Similarly, the UE 40 includes an antenna 754, a front-end 732, a radio 736, a baseband digital signal processor (DSP) 738, and a medium access controller (MAC) 730 Although both devices have the hardware shown in each device, the eNB 30 is shown having a power amplifier 646 in its front-end 632 while the UE 40 includes a low noise amplifier 748 in its front-end. The eNB 203includes a digital-to-analog converter (DAC) 634 while the UE 40 includes an analog-to-digital converter (ADC) 742. The UE 40 can be virtually any wireless device, such as a laptop computer, a cellular phone, or other wireless system, and can operate as a transmitter (transmit mode) or as a receiver (receive mode).

The MAC 630 of the eNB 30 includes an embedded central processing unit (CPU) 624 and a data memory 620, such that the uplink traffic control method 200, some portion of which is software-based, in some embodiments, can be loaded into the memory and executed by the CPU. Similarly, the MAC 730 of the UE 40 includes an embedded central processing unit (CPU) 724 and a data memory 720, such that a software-based uplink traffic control method 200, can be loaded into the memory and executed by the CPU. The depiction of Figure 9A is a simplified representation of the MACs 630 and 730, and other devices, circuits, and logic elements that can be part of the MACs are omitted.

The MAC 630 interfaces with logic devices that are commonly found in transmitters and receivers: the front-end 632, an ADC (not shown), the DAC 634, the radio 636, and the DSP 638. The MAC 730 interfaces with its own front-end 732, the ADC 742, a DAC (not shown), the radio 736, and the DSP 738. The devices 632, 636, 634, 638, 732, 736, 742, and 738 are also known herein as target modules. The target modules, as well as the logic devices within the MACs 630 and 730, can consist of hardware, software, or a combination of hardware and software components.

The target modules are commonly found in most transmitters and receivers. The FE 632 is connected to the antenna 654, and includes a power amplifier (PA) (for the transmitter), a low noise amplifier (LNA) (for the receiver), and an antenna switch (not shown), for switching between transmitter and receiver modes. The DAC 634 is used to convert the digital signal coming from the DSP 638 to an analog signal prior to transmission via the radio (transmitter); conversely, the ADC 742 is used to convert the analog signal coming from the radio to a digital signal before processing by the DSP 738 (receiver). At the eNB 30, the radio 636 transfers the signal from base-band to the carrier frequency; at the UE 40, the radio 736 transfers the signal from carrier frequency to base-band. At the UE 40, the DSP 738 demodulates the signal from the ADC 742, for processing by the MAC 730. At the eNB 30, the DSP 638 modulates the MAC data into an OFDM signal in base-band frequency, and sends the resulting signal to the DAC 634.

A typical transmit operation occurs as follows: at the eNB 30, the MAC 630 sends a packet to the DSP 638. The DSP 638 converts the packet into a digital OFDM signal and sends it to the DAC 634. The DAC 634 converts the signal into an analog signal, and sends the signal to the radio 636. The radio 636 modulates the base-band signal to the carrier frequency and sends the signal to the power amplifier 646 of the front-end 632, which amplifies the signal to be suitable for over-air transmission via the antenna 654.

At the UE 40, the signal is received by the antenna 754. The weak analog signal is received into the low noise amplifier 748 of the front-end 732, sending the amplified analog signal to the radio 736, which filters the signal according to the selected frequency band and demodulates the carrier frequency signal into a base-band signal. The radio 736 sends the analog signal to the ADC 742, which converts the analog signal to a digital signal, suitable for processing by the DSP 738. The DSP 738 demodulates the signal and converts the signal to MAC 730 packet bytes. Other operations, such as encryption and decryption of the packets, are not shown. Where the transmission is successful, the packet received by the MAC 730 in the UE 40 is the same as the packet transmitted by the MAC 630 in the eNB 30.

In other embodiments, as depicted in Figure 9B, the eNB 30 and the UE 40 do not include a CPU in the MAC. Instead, an application-specific integrated circuit (ASIC) 690 can drive the uplink traffic control method 200 as a state machine implemented using logic registers (692). The ASIC solution of Figure 9B can be preferred over the MAC-based implementation of Figure 9A, for example, in systems in which low power consumption is important.

As used herein, the term "circuitry" may refer to, be part of, or include an ASIC, an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

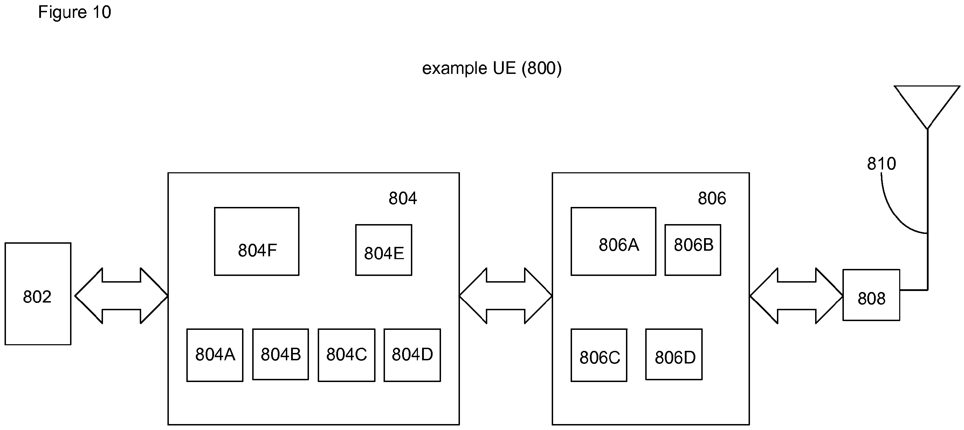

Embodiments described herein may be implemented into a system using any suitably configured hardware and/or software. Figure 10 illustrates, for one embodiment, example components of a User Equipment (UE) device 800. In some embodiments, the UE device 800 may include application circuitry 802, baseband circuitry 804, Radio Frequency (RF) circuitry 806, front-end module (FEM) circuitry 808 and one or more antennas 810, coupled together at least as shown.

The application circuitry 802 may include one or more application processors. For example, the application circuitry 802 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 804 may include circuitry such as, but not limited to, one or more single-core or multi-core processors. The baseband circuitry 804 may include one or more baseband processors and/or control logic to process baseband signals received from a receive signal path of the RF circuitry 806 and to generate baseband signals for a transmit signal path of the RF circuitry 806. Baseband processing circuity 804 may interface with the application circuitry 802 for generation and processing of the baseband signals and for controlling operations of the RF circuitry 806. For example, in some embodiments, the baseband circuitry 804 may include a second generation (2G) baseband processor 804A, third generation (3G) baseband processor 804B, fourth generation (4G) baseband processor 804C, and/or other baseband processor(s) 804D for other existing generations, generations in development, or to be developed in the future (e.g., fifth generation (5G), 6G, etc.). The baseband circuitry 804 (e.g., one or more of baseband processors 804A - D) may handle various radio control functions that enable communication with one or more radio networks via the RF circuitry 806. The radio control functions may include, but are not limited to, signal modulation/demodulation, encoding/decoding, radio frequency shifting, etc. In some embodiments, modulation/demodulation circuitry of the baseband circuitry 804 may include Fast-Fourier Transform (FFT), precoding, and/or constellation mapping/demapping functionality. In some embodiments, encoding/decoding circuitry of the baseband circuitry 804 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 804 may include elements of a protocol stack such as, for example, elements of an EUTRAN protocol including, for example, physical (PHY), media access control (MAC), radio link control (RLC), packet data convergence protocol (PDCP), and/or radio resource control (RRC) elements. A central processing unit (CPU) 804E of the baseband circuitry 804 may be configured to run elements of the protocol stack for signaling of the PHY, MAC, RLC, PDCP, and/or RRC layers. In some embodiments, the baseband circuitry may include one or more audio digital signal processor(s) (DSP) 804F. The audio DSP(s) 804F may include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 804 and the application circuitry 802 may be implemented together such as, for example, on a system on a chip (SOC).

In some embodiments, the baseband circuitry 804 may provide for communication compatible with one or more radio technologies. For example, in some embodiments, the baseband circuitry 804 may support communication with an EUTRAN and/or other wireless metropolitan area networks (WMAN), a wireless local area network (WLAN), or a wireless personal area network (WPAN). Embodiments in which the baseband circuitry 804 is configured to support radio communications of more than one wireless protocol may be referred to as multi-mode baseband circuitry.

RF circuitry 806 may enable communication with wireless networks using modulated electromagnetic radiation through a non-solid medium. In various embodiments, the RF circuitry 806 may include switches, filters, amplifiers, etc., to facilitate the communication with the wireless network. RF circuitry 806 may include a receive signal path which may include circuitry to down-convert RF signals received from the FEM circuitry 808 and provide baseband signals to the baseband circuitry 804. RF circuitry 806 may also include a transmit signal path which may include circuitry to up-convert baseband signals provided by the baseband circuitry 804 and provide RF output signals to the FEM circuitry 808 for transmission.

In some embodiments, the RF circuitry 806 may include a receive signal path and a transmit signal path. The receive signal path of the RF circuitry 806 may include mixer circuitry 806A, amplifier circuitry 806B and filter circuitry 806C. The transmit signal path of the RF circuitry 806 may include filter circuitry 806C and mixer circuitry 806A. RF circuitry 806 may also include synthesizer circuitry 806D for synthesizing a frequency for use by the mixer circuitry 806A of the receive signal path and the transmit signal path. In some embodiments, the mixer circuitry 806A of the receive signal path may be configured to down-convert RF signals received from the FEM circuitry 808 based on the synthesized frequency provided by synthesizer circuitry 806D. The amplifier circuitry 806B may be configured to amplify the down-converted signals and the filter circuitry 806C may be a low-pass filter (LPF) or band-pass filter (BPF) configured to remove unwanted signals from the down-converted signals to generate output baseband signals. Output baseband signals may be provided to the baseband circuitry 804 for further processing. In some embodiments, the output baseband signals may be zero-frequency baseband signals, although this is not a requirement. In some embodiments, mixer circuitry 806A of the receive signal path may comprise passive mixers, although the scope of the embodiments is not limited in this respect.

In some embodiments, the mixer circuitry 806A of the transmit signal path may be configured to up-convert input baseband signals based on the synthesized frequency provided by the synthesizer circuitry 806D to generate RF output signals for the FEM circuitry 808. The baseband signals may be provided by the baseband circuitry 804 and may be filtered by filter circuitry 806C. The filter circuitry 806C may include a low-pass filter (LPF), although the scope of the embodiments is not limited in this respect.

In some embodiments, the mixer circuitry 806A of the receive signal path and the mixer circuitry 806A of the transmit signal path may include two or more mixers and may be arranged for quadrature downconversion and/or upconversion, respectively. In some embodiments, the mixer circuitry 806A of the receive signal path and the mixer circuitry 806A of the transmit signal path may include two or more mixers and may be arranged for image rejection (e.g., Hartley image rejection). In some embodiments, the mixer circuitry 806A of the receive signal path and the mixer circuitry may be arranged for direct downconversion and/or direct upconversion, respectively. In some embodiments, the mixer circuitry 806A of the receive signal path and the mixer circuitry of the transmit signal path may be configured for superheterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 806 may include analog-to-digital converter (ADC) and digital-to-analog converter (DAC) circuitry and the baseband circuitry 804 may include a digital baseband interface to communicate with the RF circuitry 806.

In some dual-mode embodiments, a separate radio IC circuitry may be provided for processing signals for each spectrum, although the scope of the embodiments is not limited in this respect.

In some embodiments, the synthesizer circuitry 806D may be a fractional-N synthesizer or a fractional N/N+1 synthesizer, although the scope of the embodiments is not limited in this respect as other types of frequency synthesizers may be suitable. For example, synthesizer circuitry 806D may be a delta-sigma synthesizer, a frequency multiplier, or a synthesizer comprising a phase-locked loop with a frequency divider.

The synthesizer circuitry 806D may be configured to synthesize an output frequency for use by the mixer circuitry 806A of the RF circuitry 806 based on a frequency input and a divider control input. In some embodiments, the synthesizer circuitry 806D may be a fractional N/N+1 synthesizer.

In some embodiments, frequency input may be provided by a voltage controlled oscillator (VCO), although that is not a requirement. Divider control input may be provided by either the baseband circuitry 804 or the applications processor 802 depending on the desired output frequency. In some embodiments, a divider control input (e.g., N) may be determined from a look-up table based on a channel indicated by the applications processor 802.

Synthesizer circuitry 806D of the RF circuitry 806 may include a divider, a delay-locked loop (DLL), a multiplexer, and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump, and a D-type flip-flop. In these embodiments, the delay elements may be configured to break a VCO period up into N_{d} equal packets of phase, where N_{d} is the number of delay elements in the delay line. In this way, the DLL provides negative feedback to help ensure that the total delay through the delay line is one VCO cycle.

In some embodiments, synthesizer circuitry 806D may be configured to generate a carrier frequency as the output frequency, while in other embodiments, the output frequency may be a multiple of the carrier frequency (e.g., twice the carrier frequency, four times the carrier frequency), and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 806 may include an IQ/polar converter.

FEM circuitry 808 may include a receive signal path which may include circuitry configured to operate on RF signals received from one or more antennas 810, amplify the received signals and provide the amplified versions of the received signals to the RF circuitry 806 for further processing. FEM circuitry 808 may also include a transmit signal path which may include circuitry configured to amplify signals for transmission provided by the RF circuitry 806 for transmission by one or more of the one or more antennas 810.

In some embodiments, the FEM circuitry 808 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 806). The transmit signal path of the FEM circuitry 808 may include a power amplifier (PA) to amplify input RF signals (e.g., provided by RF circuitry 806), and one or more filters to generate RF signals for subsequent transmission (e.g., by one or more of the one or more antennas 810.

In some embodiments, the UE device 800 may include additional elements such as, for example, memory/storage, display, camera, sensor, and/or input/output (I/O) interface.

While the application has been described with respect to a limited number of embodiments, those skilled in the art will appreciate numerous modifications and variations therefrom.

## Claims

1. A user equipment, UE, (40) to control Wireless Fidelity, WiFi, uplink, UL, traffic in an integrated WiFi and Long Term Evolution, LTE, network, the UE comprising a WiFi modem (36) and an LTE modem (34), the UE conforming to a 3^{rd} Generation Partnership Project, 3GPP specification, wherein a default radio bearer is established according to the 3GPP specification;
wherein UL transmissions from the UE take place using both the default radio bearer (110) and a WiFi radio bearer (120), **characterized by** the UE to receive a radio resource control, RRC, connection reconfiguration message to create the WiFi radio bearer (120) for wireless transmissions to a WiFi Access Point, AP, and
wherein the WiFi radio bearer (120) is programmed as a downlink only radio bearer.

2. The UE (40) of claim 1, further to:
use a Probe Request to identify nearby hidden WiFi APs; and
measure the identified nearby hidden WiFi APs.

3. The UE (40) of claim 2, wherein the identified nearby hidden WiFi APs are measured using a Received Signal Received Power, RSRP, of a media between the UE and the identified nearby hidden WiFi APs.

4. The UE (40) of claim 1, further to program the WiFi radio bearer (120) for lower priority transmissions by modifying Enhanced Distributed Channel Access, EDCA, parameters.

5. The UE (40) of claim 4, wherein the EDCA parameters of the WiFi radio bearer (120) are modified to change an idle time of the WiFi bearer before back off or transmission;
a contention window length to be used for back off; or
a duration the UE may transmit after acquiring the WiFi radio bearer.

6. The UE (40) of claim 5, wherein the EDCA parameters are modified using RRC signaling.

7. The UE (40) of claim 6, wherein the WiFi radio bearer (120) is set up for a predefined transmission, wherein the predefined transmission is selected from a group consisting of: voice, video, best effort, and background.

8. An enhanced Node B, eNB, (30) to control Wireless Fidelity, WiFi, uplink, UL, traffic in an integrated WiFi and Long Term Evolution, LTE, network, the integrated WiFi/LTE network comprising an integrated access point, AP, (26) comprising the eNB (30) and a WiFi AP (32), the eNB conforming to a 3^{rd} Generation Partnership Project, 3GPP, specification, wherein a default radio bearer is established according to the 3GPP specification;
wherein UL transmissions to the eNB take place using both the default radio bearer and the WiFi radio bearer; **characterized by**
transmitting a radio resource control, RRC, connection reconfiguration message to create a WiFi radio bearer for wireless transmissions;
and
wherein the WiFi radio bearer is programmed as a downlink only radio bearer.

9. The eNB (30) of claim 8, further to receive a WiFi measurement report of any nearby WiFi APs.

10. The eNB (30) of claim 8, further to transmit a second RRC connection reconfiguration message to modify Enhanced Distributed Channel Access, EDCA, parameters of the WiFi radio bearer;
wherein the EDCA parameters comprise:
an amount of time the WiFi radio bearer is to be idle before back off or transmission;
a length of a contention window to be used for back off; and
a duration of the allowed transmission using the WiFi radio bearer.

## Patentansprüche

1. Benutzergerät (User Equipment, UE) (40) zum Steuern eines Wireless-Fidelity-Uplink-Datenverkehrs (WiFi-UL-Datenverkehr) in einem integrierten WiFi- und Long-Term-Evolution-Netzwerk (WiFi-LTE-Netzwerk), wobei das UE ein WiFi-Modem (36) und ein LTE-Modem (34) umfasst, wobei das UE eine 3GPP-Spezifikation (3^{rd} Generation Partnership Project specification) erfüllt, wobei ein standardmäßiger Funkträger gemäß der 3GPP-Spezifikation eingerichtet wird;
wobei UL-Übertragungen von dem UE sowohl mithilfe des standardmäßigen Funkträgers (110) als auch mit einem WiFi-Funkträger (120) stattfinden, **dadurch gekennzeichnet, dass**
das UE eine Neukonfigurationsnachricht für eine Funkressourcensteuerverbindung (Radio Resource Control connection, RRC-Verbindung) empfängt, um den WiFi-Funkträger (120) für drahtlose Übertragungen zu einem WiFi-Zugangspunkt (WiFi Access Point, WiFi-AP) zu erstellen, und
wobei der WiFi-Funkträger (120) als ein reiner Downlink-Funkträger programmiert ist.

2. UE (40) nach Anspruch 1, das außerdem konfiguriert ist zum:
Verwenden einer Testanfrage, um nahegelegene verborgene WiFi-APs, zu identifizieren; und
Messen der identifizierten nahegelegenen verborgenen WiFi-APs.

3. UE (40) nach Anspruch 2, wobei die identifizierten nahegelegenen verborgenen WiFi-APs mithilfe einer Empfangsleistung eines Referenzsignals (Received Signal Received Power, RSRP) eines Mediums zwischen dem UE und den identifizierten nahegelegenen verborgenen WiFi-APs gemessen werden.

4. UE (40) nach Anspruch 1, das außerdem konfiguriert ist zum Programmieren eines WiFi-Funkträgers (120) für Übertragungen mit einer niedrigeren Priorität, indem erweiterte verteilte Kanalzugangsparameter (Enhanced Distributed Channel Access parameters, EDCA-Parameter) modifiziert werden.

5. UE (40) nach Anspruch 4, wobei die EDCA-Parameter des WiFi-Funkträgers (120) modifiziert werden zum Ändern:
einer Leerlaufzeit des WiFi-Trägers vor einem Zurückstellen oder vor einer Übertragung;
einer Zurückhaltungsfensterlänge, die für ein Zurückstellen verwendet wird; oder
einer Dauer, während der das UE übertragen darf, nachdem der WiFi-Funkträger erlangt wurde.

6. UE (40) nach Anspruch 5, wobei die EDCA-Parameter mithilfe einer RRC-Signalisierung modifiziert werden.

7. UE (40) nach Anspruch 6, wobei der WiFi-Funkträger (120) für eine vordefinierte Übertragung eingerichtet wird, wobei die vordefinierte Übertragung ausgewählt wird aus der Gruppe, die besteht aus: einer Stimme, einem Video, einem besten Versuch und einem Hintergrund.

8. Erweiterter B-Knoten (enhanced NodeB, eNB) (30) zum Steuern eines Wireless-Fidelity-Uplink-Datenverkehrs (WiFi-UL-Datenverkehr) in einem integrierten WiFi- und Long-Term-Evolution-Netzwerk (WiFi-LTE-Netzwerk), wobei das integrierte WiFi/LTE-Netzwerk einen integrierten Zugangspunkt (Access Point, AP) (26) umfasst, der den eNB (30) und einen WiFi-AP (32) umfasst, wobei das eNB eine 3GPP-Spezifikation (3^{rd} Generation Partnership Project specification) erfüllt, wobei ein standardmäßiger Funkträger gemäß der 3GPP-Spezifikation eingerichtet wird;
wobei UL-Übertragungen zu dem eNB sowohl mithilfe des standardmäßigen Funkträgers als auch mit dem WiFi-Funkträger stattfinden, **gekennzeichnet durch**
Übertragen einer Neukonfigurationsnachricht für eine Funkressourcensteuerverbindung (Radio Resource Control connection, RRC-Verbindung), um einen WiFi-Funkträger für drahtlose Übertragungen zu erstellen; und
wobei der WiFi-Funkträger als ein reiner Downlink-Funkträger programmiert ist.

9. eNB (30) nach Anspruch 8, der außerdem konfiguriert ist zum Empfangen eines WiFi-Messberichts von allen nahegelegenen WiFi-APs.

10. eNB (30) nach Anspruch 8, der außerdem konfiguriert ist zum Übertragen einer zweiten RRC-Verbindungsneukonfigurationsnachricht, um erweiterte verteilte Kanalzugangsparameter (Enhanced Distributed Channel Access parameters, EDCA-Parameter) des WiFi-Funkträgers zu modifizieren; wobei die EDCA-Parameter umfassen:
eine Zeitdauer, in welcher der WiFi-Funkträger vor einem Zurückstellen oder vor einem Übertragen im Leerlauf ist;
eine Länge eines Zurückhaltungsfensters, das für ein Zurückstellen verwendet wird; und
eine Dauer der erlaubten Übertragung mithilfe des WiFi-Funkträgers.

## Revendications

1. Equipement utilisateur, UE, (40) pour commander le trafic de liaison montante, UL, de fidélité sans fil, WiFi, dans un réseau WiFi et LTE (« Long Term Evolution ») intégré, l'UE comprenant un modem WiFi (36) et un modem LTE (34), l'UE étant conforme à une spécification de projet de partenariat de 3ème génération, 3GPP, dans lequel un support radio par défaut est établi selon la spécification 3GPP ;
dans lequel des transmissions UL provenant de l'UE ont lieu en utilisant à la fois le support radio par défaut (110) et un support radio WiFi (120),
**caractérisé en ce que** l'UE est destiné à recevoir un message de reconfiguration de connexion de commande de ressource radio, RRC, pour créer le support radio WiFi (120) pour des transmissions sans fil à un point d'accès, AP, WiFi, et
dans lequel le support radio WiFi (120) est programmé comme un support radio de liaison descendante seulement.

2. UE (40) selon la revendication 1, destiné en outre à :
utiliser une requête de sondage pour identifier des AP WiFi cachés à proximité ; et
mesurer les AP WiFi cachés à proximité identifiés.

3. UE (40) selon la revendication 2, dans lequel les AP WiFi cachés à proximité identifiés sont mesurés en utilisant une puissance reçue d'un signal reçu, RSRP, d'un support entre l'UE et les AP WiFi cachés à proximité identifiés.

4. UE (40) selon la revendication 1, destiné en outre à programmer le support radio WiFi (120) pour des transmissions de priorité inférieure en modifiant des paramètres d'accès à un canal distribué amélioré, EDCA.

5. UE (40) selon la revendication 4, dans lequel les paramètres EDCA du support radio WiFi (120) sont modifiés pour changer un temps d'inactivité du support WiFi avant un repli ou une transmission ;
une longueur de fenêtre de contention à utiliser pour le repli ; ou
une durée pendant laquelle l'UE peut transmettre après acquisition du support radio WiFi.

6. UE (40) selon la revendication 5, dans lequel les paramètres EDCA sont modifiés en utilisant une signalisation RRC.

7. UE (40) selon la revendication 6, dans lequel le support radio WiFi (120) est configuré pour une transmission prédéfinie, la transmission prédéfinie étant sélectionnée dans un groupe composé de : vocale, vidéo, service au mieux et arrière-plan.

8. Noeud B évolué, eNB, (30) pour commande le trafic de liaison montante, UL, de fidélité sans fil, WiFi, dans un réseau WiFi et LTE (« Long Terme Evolution ») intégré, le réseau WiFi/LTE intégré comprenant un point d'accès, AP, intégré (26) comprenant l'eNB (30) et un AP WiFi (32), l'eNB étant conforme à une spécification de projet de partenariat de 3ème génération, 3GPP, dans lequel un support radio par défaut est établi selon la spécification 3GPP ;
dans lequel des transmissions UL à l'eNB ont lieu en utilisant à la fois le support radio par défaut et le support radio WiFi ;
**caractérisé par**
la transmission d'un message de reconfiguration de connexion de commande de ressource radio, RRC, pour créer un support radio WiFi pour des transmissions sans fil ; et
dans lequel le support radio WiFi est programmé comme un support radio de liaison descendante seulement.

9. eNB (30) selon la revendication 8, destiné en outre à recevoir un rapport de mesure WiFi de n'importe quel AP WiFi à proximité.

10. eNB (30) selon la revendication 8, destiné en outre à transmettre un deuxième message de reconfiguration de connexion RRC pour modifier des paramètres d'accès à un canal distribué amélioré, EDCA, du support radio WiFi ;
dans lequel les paramètres EDCA comprennent :
une quantité de temps pendant laquelle le support radio WiFi doit être inactif avant un repli ou une transmission ;
une longueur d'une fenêtre de contention à utiliser pour le repli ; et
une durée de la transmission autorisée utilisant le support radio WiFi.
